(19) Europäisches Patentamt
European Patent Office
Office européen des brevets

(11) EP 1 692 230 B1

(12) EUROPEAN PATENT SPECIFICATION

(45) Date of publication and mention
of the grant of the patent:
**31.12.2008 Bulletin 2009/01**

(51) Int Cl.:
*C09C 1/42* (2006.01)        *C08K 3/34* (2006.01)
*D21H 19/40* (2006.01)        *C08K 9/06* (2006.01)
*D21H 17/68* (2006.01)

(21) Application number: **04819544.0**

(22) Date of filing: **18.11.2004**

(86) International application number:
**PCT/US2004/038575**

(87) International publication number:
**WO 2005/052066 (09.06.2005 Gazette 2005/23)**

(54) **RAPID DISPERSING HYDROUS KAOLINS**

SCHNELL DISPERGIERENDE WASSERHALTIGE KAOLINE

KAOLINS HYDRATES A DISPERSION RAPIDE

(84) Designated Contracting States:
**AT BE BG CH CY CZ DE DK EE ES FI FR GB GR
HU IE IS IT LI LU MC NL PL PT RO SE SI SK TR**

(30) Priority: **21.11.2003 US 523672 P**

(43) Date of publication of application:
**23.08.2006 Bulletin 2006/34**

(60) Divisional application:
**08161984.3 / 1 995 284**

(73) Proprietor: **Imerys Kaolin, Inc.
Dry Branch, GA 31020 (US)**

(72) Inventors:
• **SARE, Edward, J.
Macon, GA 31210 (US)**
• **RAPER, Stephen, C.
Byron, GA 31088 (US)**

(74) Representative: **Rushton, David John
HASELTINE LAKE
Redcliff Quay
120 Redcliff Street
Bristol BS1 6HU (GB)**

(56) References cited:
WO-A-98/21158        WO-A-03/022933
WO-A-03/091323        FR-A- 2 651 002
US-A1- 2003 164 117

**Description**

This application claims priority to U.S. Provisional Patent Application No. 60/523,672, filed November 21, 2003.

Consistent with embodiments of the present invention, a composition comprising pulverized hydrous kaolins is disclosed. The pulverized hydrous kaolins disclosed herein can have a particle size distribution that enables the kaolins to exhibit a rapid dispersion in both aqueous medium and non-aqueous medium. The composition disclosed herein can be used in many areas, such as inks, fillers or extenders in paint, plastics, polymers, papermaking, and coatings. More generally, the composition disclosed herein may be used wherever hydrous kaolins are used.

Particulate kaolins occur naturally in the hydrous form and exist as crystalline structures containing hydroxyl functionality. The hydrous kaolins have been widely used in the paper industry. For instance, US 2003/0164117 discloses kaolin clay pigments having a defined combination of optical and physical properties, useful in paper filler and coating compositions, ink compositions and printing applications; WO 03/022933 discloses hydrous kaolin products useful in paper coating and filling. However, because the dispersion rate of the typical hydrous kaolins in aqueous medium and/or non-aqueous medium can be limited, the typical hydrous kaolins may sometimes not be satisfactory in some applications, such as inks, polymers, and coatings.

Therefore, there remains a need for hydrous kaolins capable of exhibiting a high dispersion rate in both aqueous medium and non-aqueous medium, in order to provide an improved rate of makedown in the applications, such as inks, polymers, and coatings. The present inventors have surprisingly discovered that a relatively low portion of the very fine particles can lead to a high rate of dispersion and that pulverized hydrous kaolins having a defined particle size distribution can afford a rapid dispersion in both aqueous medium and non-aqueous medium.

Accordingly, one aspect of the present invention relates to a composition comprising pulverized hydrous kaolin obtainable by using a Bauer mill, an air classification mill or a micromill, the kaolin having a particle size distribution with a relatively low portion of fine particles, wherein the relatively low portion of fine particles is defined as a particle size distribution meeting the following ratio:

$$\frac{\text{(cumulative mass at 0.5 } \mu\text{m)}}{\text{(cumulative mass at 2 } \mu\text{m)}} \leq 0.5,$$

and the pulverized hydrous kaolin has a median particle size of, for example, less than or equal to 2.0 $\mu$m.
The hydrous kaolin of the composition of the invention may have a Hegman grind of more than 2 in 3 minutes, such as more than 2.5 in 3 minutes, and more than 3 in 3 minutes, in accordance with the "SSM" V-T Alkyd Hegman Test.

Furthermore, another aspect of the present invention provides a method of preparing the composition disclosed herein, comprising:

pulverizing hydrous kaolins by using a Bauer mill, an air classification mill or a micromill, wherein the hydrous kaolins have a particle size distribution meeting the following ratio:

$$\frac{\text{(cumulative mass at 0.5 } \mu\text{m)}}{\text{(cumulative mass at 2 } \mu\text{m)}} \leq 0.5,$$

and
a median particle size of, for example, less than or equal to 2.0 $\mu$m; and
including the pulverized hydrous kaolins in the composition.

In addition, the present invention further provides a method for increasing the dispersion rate of hydrous kaolins, comprising pulverizing the hydrous kaolins by using a Bauer mill, an air classification mill or a micromill, wherein the hydrous kaolins have a particle size distribution of the following ratio:

$$\frac{\text{(cumulative mass at 0.5 } \mu\text{m)}}{\text{(cumulative mass at 2 } \mu\text{m)}} \leq 0.5,$$

and

a median particle size of, for example, less than or equal to 2.0 µm.

Another aspect of the present invention provides products, such as inks, paints, polymers, rubbers, and coatings, comprising the inventive hydrous kaolins as disclosed herein.

The hydrous kaolins that can be used in the present invention can be obtained naturally from various locations, such as from the Rio Capim area of Brazil and Georgia of the United States.

The "particle size distribution" (PSD) disclosed herein is measured by a ratio of: (1) a cumulative mass of particles with a particle size of 0.5 µm to (2) a cumulative mass of particles with a particle size of 2 µm. The PSD of a particulate product, such as the pigment product according to the present invention, can be determined by measuring the sedimentation of the particulate product in a fully dispersed condition in a standard aqueous medium, such as water, using a SEDIGRAPH™ instrument, e.g., SEDIGRAPH 5100, obtained from Micromeritics Corporation, USA. The "particle size" of a given particle is expressed in terms of the diameter of a sphere of equivalent diameter, which sediments through the medium, *i.e.*, an equivalent spherical diameter (ESD).

All percentages and amounts expressed herein are by weight. All amounts, percentages, and ranges expressed herein are approximate.

In one embodiment, the inventive hydrous kaolin disclosed herein has a median particle size of less than or equal to 2 µm. For example, the median particle size can range from 0.5 µm to 1.5 µm, such as greater than 0.5 µm but less than 1.5 µm, or less than 1 µm. The median particle size can also, for example, be less than 2 µm but greater than 0.4 µm.

The inventive hydrous kaolin disclosed herein can have a high dispersion rate in both aqueous medium and non-aqueous medium. As disclosed herein, the "aqueous medium" means a water-based medium, and more generally a polar, hydrophilic medium. The "non-aqueous medium" means a generally non-polar, hydrophobic medium. Optionally, both the aqueous medium and the non-aqueous medium can comprise at least one soluble organic solvent chosen, for example, from ketones, esters, and alcohols. Additionally, the medium can comprise emulsions of water and insoluble organic solvents, for example, hydrocarbons.

As disclosed herein, pulverization is obtainable by using Bauer mills, air classification mills (ACMs) or micromills.

Even further disclosed herein are products, such as inks; paints, such as matte paints; polymer products; rubber products; and coatings, such as non-aqueous coatings for paper, using the inventive hydrous kaolins.

In one embodiment, the present invention provides an ink comprising, in an appropriate medium, the inventive hydrous kaolins disclosed herein. The "ink" disclosed herein can be chosen from aqueous inks and non-aqueous inks, including, for example, gravure inks, heat-set inks, lithographic printing inks, and newsprint inks. The inventive hydrous kaolins disclosed herein can serve, for example, as a pigment in the ink and can provide economic advantage to the ink product, as they can exhibit high dispersion rate in both aqueous medium and non-aqueous medium.

The appropriate medium in the ink disclosed herein can be chosen from aqueous media and non-aqueous media conventionally used in the art.

Depending on the final applications of the ink, the ink disclosed herein can further comprise at least one component chosen, for example, from resins, such as vinyl resins; polymers; additives, such as rheology modifiers, surfactants, and drying accelerating agents such as sodium lauryl sulfate, N,N-diethyl-m-toluamide, cyclohexylpyrrolidinone and butyl carbitol; fillers; diluents; humectants, such as ethylene glycol, propylene glycol, diethylene glycols, glycerine, dipropylene glycols, polyethylene glycols, polypropylene glycols, amides, ethers, carboxylic acids, esters, alcohols, organosulfides, organosulfoxides, sulfones, alcohol derivatives, carbitol, butyl carbitol, cellosolve, ether derivatives, amino alcohols, and ketones; and biocides, such as benzoates, sorbates, and isothiazolones. The ink product can further comprise at least one additional pigment chosen from those conventionally used in the art.

The amount of inventive hydrous kaolin in a given ink can vary greatly based on the formulation of the ink, as would be apparent to one of ordinary skill in the art. For example, in some embodiments, the inventive hydrous kaolin can be present in an amount ranging from 5% to 45% by weight of the ink as formulated.

In another embodiment, the present invention provides a paint, such as an aqueous or non-aqueous industrial coating, architectural paint, deco paint, or art paint, comprising, in an appropriate medium, the inventive hydrous kaolins disclosed herein. The inventive hydrous kaolins disclosed herein can serve, for example, as a gloss control agent pigment in the paint. The inventive hydrous kaolin can generally be present in an amount less than the critical pigment volume. However, the inventive pigments can also be present in higher pigment volume concentrations, such as in the range of 1% to 80% by weight on a dry film basis.

The paint disclosed herein can further comprise at least one component chosen from binders, such as polymeric binders, for example, water dispersible binders chosen, for example, from polyvinyl alcohol (PVA) and latex; and additives conventionally used in paints, chosen, for example, from surfactants, thickeners, biocides, defoamers, wetting agents, dispersants, and coalescents. The paint disclosed herein can comprise at least one additional pigment chosen, for example, from $TiO_2$ and calcium carbonate.

In another embodiment, the present invention provides a polymer product comprising the inventive hydrous kaolins disclosed herein. The inventive hydrous kaolin can be present at a concentration of up to 60% by weight of the polymer as compounded and up to 30% by weight of the final polymer article. The inventive hydrous kaolin can be used both for resin extension (i.e., filling), $TiO_2$ extension, and reinforcement of the polymer.

The polymer product disclosed herein comprises at least one polymer resin. The term "resin" means a polymeric material, either solid or liquid, prior to shaping into a plastic article. The at least one polymer resin used in the present invention is one which, on cooling (in the case of thermoplastic plastics) or curing (in the case of thermosetting plastics), can form a plastic material.

The at least one polymer resin, which can be used in the present invention, can be chosen, for example, from polyolefin resins, polyamide resins, polyester resins, engineering polymers, allyl resins, thermoplastic resins, and thermoset resins.

In another embodiment, the present invention provides a rubber product comprising the inventive hydrous kaolins disclosed herein. The inventive hydrous kaolin composition can provide the benefits of resin extension, reinforcement of the rubber, and increased hardness of the rubber composition. The rubber product disclosed herein comprises at least one rubber chosen from natural rubbers and synthetic rubbers. For example, sulphur-vulcanizable rubbers, which can be used for manufacture of tire treads can be used in the present invention. Examples of the synthetic rubbers, which may be used in the present invention, include, but are not limited to, styrene-butadiene rubber (SBR), vinyl-styrene-butadiene rubber (VSBR), butadiene rubber (BR), and neoprene rubber or polyisoprene. The SBR may be emulsion SBR (E-SBR) or solution SBR (S-SBR). The VSBR may be solution VSBR (S-VSBR). And examples of the BR include, but are not limited to, cis-1,3-polybutadiene rubber and cis-1,4-polybutadiene rubber. An example of the natural rubbers, which can be used in the present invention, is Standard Malaysian natural rubber.

The rubber product disclosed herein may further comprise at least one additive chosen from conventional additives used in the art, for example, extender oils and mineral and synthetic fillers. The rubber product can include the inventive hydrous kaolin in an amount up to 35% by weight as formulated.

In another embodiment, the present invention provides a coating, such as a non-aqueous coating for paper or paperboard, comprising the inventive hydrous kaolins disclosed herein. The coating can further comprise at least one binder chosen from binders conventionally used in the art. Exemplary binders include, but are not limited to, adhesives derived from natural starch and synthetic binders, including, for example, styrene butadiene, acrylic latex, vinyl acetate latex, or styrene acrylic, casein, polyvinyl alcohol, polyvinyl acetate, or mixtures thereof.

Paper and paperboard coatings may have different binder levels depending on the end use of the coated product. Appropriate binder levels based upon the desired end product would be readily apparent to the skilled artisan. For example, binder levels can be controlled to allow the surfaces to receive ink without disruption. The latex binder levels for paper or paperboard coatings generally range from 3% to 30% by weight relative to the total weight of the coating. For example, the at least one binder can be present in an amount ranging from 3% to 30%, such as from 10% to 30%, by weight relative to the total weight of the coating. Paper or paperboard coatings can include the inventive hydrous kaolins in an amount ranging from about 3% to about 95% by weight on a dry coating basis.

The present invention is further illuminated by the following nonlimiting examples, which are intended to be purely exemplary of the invention.

## EXAMPLES

In the following Examples, the particle size data were determined using SEDIGRAPH 5100 in water at the standard temperature of 34.9˚C.

## Example 1

The particle size distributions of four samples of hydrous kaolins are shown in Table I below. In this Example, Samples I and II are two conventional particle pulverized products generally considered to exhibit good dispersion in aqueous and non-aqueous systems. Inventive samples A and B were made according to the present invention from spray-dried Brazilian-based products. These inventive hydrous kaolins were pulverized using conditions known to simulate typical pulverization conditions including multiple passes through a laboratory micromill sold by Mikro Samplmil Mikropul, a division of Slick Corporation, located in Summit, New Jersey. Pulverization was accomplished by passing the sample through the micromill 3 times, using a 340 mesh screen.

TABLE I

| Particle Size Distribution | Hydrous Kaolin | | | |
|---|---|---|---|---|
| | Conventional I | Conventional II | Inventive A | Inventive B |
| 5 $\mu$m | 99.6 | 98.3 | 99.0 | 96.6 |
| 2 $\mu$m | 93.5 | 90.4 | 89.6 | 79.6 |
| 1 $\mu$m | 82.3 | 79.5 | 71.3 | 56.1 |
| 0.5 $\mu$m | 65.0 | 61.5 | 43.5 | 30.5 |
| Median $\mu$m | 0.35 | (0.4) | 0.58 | 0.84 |
| Ratio[1] | 0.7 | 0.7 | 0.5 | 0.4 |

$$^1\frac{Cumulative\ mass\ at\ 0.5\,\mu m}{Cumulative\ mass\ at\ 2\,\mu m} \leq 0.5 .$$

The results shown in Table I indicate that inventive Samples A and B according to the present invention have a particle size distribution meeting the following ratio:

$$\frac{(cumulative\ mass\ at\ 0.5\ \mu m)}{(cumulative\ mass\ at\ 2\ \mu m)} \leq 0.5 ;$$

while the conventional pulverized Samples I and II, which are not according to the present invention, do not have such a particle size distribution.

A comparative dispersion test of these four samples was conducted using the "SSM" V-T Alkyd Hegman Test. In the "SSM" V-T Alkyd Hegman Test, a pigment containing mixture as set forth in Table II was first prepared:

Table II

| Material | Volume (gal.) | Weight (lbs). | Weight % |
|---|---|---|---|
| Resin[1] | 286.2 | 2160.7 | 74.1 |
| Solvent[2] | 93.3 | 589.6 | 20.2 |
| Anti-Settling Agent[3] | 1.9 | 13.6 | 0.5 |
| Organoclay Rheology Modifier[4] | 1.1 | 13.6 | 0.5 |
| Dispersant[5] | 2.1 | 18.1 | 0.6 |
| Dryer I[6] | 0.8 | 6.8 | 0.2 |
| Dryer II[7] | 4.0 | 36.3 | 1.2 |
| Anti Skin[8] | 1.2 | 9.1 | 0.3 |

(continued)

| Material | Volume (gal.) | Weight (lbs). | Weight % |
|---|---|---|---|
| Solvent[9] | 9.4 | 68.3 | 2.3 |
| [1] Vinyl Toluene Resin (60%) = VT Alkyd (Polychem 6693-60) [2] Odorless Mineral Spirits [3] MPA-2000X [4] Bentone SD1 [5] Nuosperse 657 [6] Cobalt, 12% [7] Zirconium, 18% [8] Methyl, Ethyl Ketoxine [9] Toluene | | | |

In the base formulation, it is understood that:

the solids concentration is 45.9% by weight relative to the total weight of the base formulation; and
the solids concentration is 37.8% by volume relative to the total volume of the base formulation.

A final formulation as set forth in the following chart, was then prepared by addition of the pigment (i.e., the hydrous kaolin sample) to the base formulation:

| Material | Volume (gal.) | Weight (lbs.) | Weight % |
|---|---|---|---|
| Base Formulation | 20.6 | 149.2 | 60.2 |
| Pigment[1] | 4.4 | 98.5 | 39.8 |
| [1] Hydrous kaolin sample | | | |

In the final formulation of the pigment-containing mixture, it is understood that:

the pigment volume concentration (PVC) is 34.9% relative to the total volume of the final formulation;
the solids concentration is 69.0% by weight relative to the total weight of the final formulation; and
the solids concentration is 50.2% by volume relative to the total volume of the final formulation.

In the dispersion test, a simulated sand mill was used for grinding. Specifically, approximately 250 g of glass beads, Potters Industries A-Series, Tech Quality Glass Spheres, A-205 (nominal 2 mm diameter) were added to a 500 ml HDPE screw-top cylindrical sample bottle, along with nominally the same weight of the final formulation. The pigment-containing mixture then underwent grinding using a mechanical agitator, Red Devil Model 5400 Paint Shaker for certain period of time (grind time) as specified. Dispersion was measured as a function of time using a standard Hegman Grind gauge with Hegman National Standard ranging from 0 to 8, wherein the higher number of the Hegman Grind value, the higher the relative degree of dispersion. The results are shown in Table III.

Table III

| Grind[1] Time, Minutes | Conventional Examples | | Inventive Examples | |
|---|---|---|---|---|
| | I | II | A | B |
| | Hegman Grind Value | | | |
| 1 | 0.0 | 0.0 | 1.0 | 5.0 |
| 2 | 0.0 | 0.0 | 3.5 | 5.0 |
| 3 | 0.0 | 0.0 | 5.0 | 5.0 |
| 4 | 0.0 | 0.0 | 5.0 | 5.0 |
| 5 | 0.0 | 1.5 | 5.0 | 5.0 |

(continued)

| | Hegman Grind Value | | | |
|---|---|---|---|---|
| 6 | 1.5 | 1.5 | 5.0 | 5.0 |
| 7 | 2.5 | 3.0 | 5.0 | 5.0 |
| 8 | 3.0 | 5.0 | 5.0 | 5.0 |
| 9 | 3.5 | 5.0 | 5.0 | 5.0 |
| 10 | 4.5 | 5.0 | 5.0 | 5.0 |
| 15 | 5.0 | 5.0 | 5.0 | 5.0 |
| [1] Simulated Sand Mill | | | | |

The results shown in Table III indicate that inventive Samples A and B have a higher dispersion rate than conventional Samples I and II.

Furthermore, the film properties were measured for the four samples after drying overnight. Gloss and sheen were measured in a known manner using a Hunter Pro-3 Gloss Meter. The results are shown in Table IV:

Table IV

| | Conventional Examples | | Inventive Examples | |
|---|---|---|---|---|
| | I | II | A | B |
| 1 Minute Grind[1] | | | | |
| 20˚ Gloss | 16.7 | 17.8 | 26.6 | 14.1 |
| 60˚ Gloss | 55.2 | 59.9 | 71.5 | 58.1 |
| 85˚ Sheen | 58.2 | 70.5 | 87.4 | 85.8 |
| 5 Minute Grind[1] | | | | |
| 20˚ Gloss | 24.4 | 24.3 | 30.2 | 16.4 |
| 60˚ Gloss | 70.2 | 70.5 | 76.4 | 63.1 |
| 85˚ Sheen | 87.3 | 88.5 | 92.7 | 85.7 |
| 10 Minute Grind[1] | | | | |
| 20˚ Gloss | 34.9 | 31.7 | 33.1 | 18.0 |
| 60˚ Gloss | 78.0 | 76.6 | 77.7 | 64.5 |
| 85˚ Sheen | 90.1 | 90.0 | 92.7 | 87.7 |
| 15 Minute Grind[1] | | | | |
| 20˚ Gloss | 36.5 | 29.8 | 41.8 | 22.0 |
| 60˚ Gloss | 80.5 | 75.1 | 83.4 | 69.6 |
| 85˚ Sheen | 91.6 | 91.3 | 94.3 | 90.0 |
| [1] Simulated Sand Mill | | | | |

The results shown in Table IV indicate that inventive Samples A and B and conventional Samples I and II have good non-aqueous dispersion properties.

## Example 2

To confirm that the improved dispersion rate is related to a reduced fine distribution, the particle size distributions of six samples of hydrous kaolins were measured. The results are shown in Table V. In this Example, Samples II, III and IV are conventional pulverized hydrous kaolin products known to have high dispersion in non-aqueous medium. Sample II is the same as that in Example I. Samples C, D, and E are samples made according to the present invention using Brazilian kaolins and Georgia kaolins, and were pulverized by laboratory pulverization under the same conditions as set forth in Example 1.

Table V

| Particle Size Distribution | Conventional Examples | | Inventive Examples | | | Conventional Example |
|---|---|---|---|---|---|---|
| | II | III | C | D | E | IV |
| 5 $\mu$m | 98.3 | 81.1 | 97.3 | 97.5 | 98.6 | 98.4 |
| 2 $\mu$m | 90.4 | 91.4 | 87.0 | 76.3 | 94.2 | 97.0 |
| 1 $\mu$m | 79.5 | 78.9 | 68.0 | 52.2 | 79.4 | 94.9 |
| 0.5 $\mu$m | 61.9 | 59.6 | 39.0 | 27.3 | 49.9 | 86.4 |
| Median $\mu$m [1] | (0.4) | (0.4) | 0.6 | 0.9 | 0.5 | (<0.3) |
| Ratio | 0.7 | 0.7 | 0.5 | 0.4 | 0.5 | 0.9 |

$$^1\frac{Cumulative\ mass\ at\ 0.5\,\mu m}{Cumulative\ mass\ at\ 2\,\mu m} \leq 0.5$$

The dispersion rate and film properties of these six samples were also measured according to the methods disclosed in Example I. The results are shown in Table VI and Table VII, respectively:

Table VI

| Grind[1] Time, Minutes | Conventional Examples | | Inventive Examples | | | Conventional Example |
|---|---|---|---|---|---|---|
| | II | III | C | D | E | IV |
| | Hegman Grind Value | | | | | |
| 1 | 0.00 | 0.00 | 2.00 | 2.00 | 2.50 | 0.00 |
| 2 | 0.00 | 0.00 | 3.00 | 2.50 | 3.50 | 0.00 |
| 3 | 0.00 | 1.00 | 3.50 | 2.50 | 4.00 | 0.00 |
| 4 | 1.00 | 3.00 | 3.50 | 3.50 | 4.50 | 0.00 |
| 5 | 3.00 | 4.00 | 4.00 | 3.50 | 4.50 | 0.00 |
| 6 | 3.50 | 4.50 | 4.50 | 4.00 | 4.50 | 0.50 |
| 7 | 4.50 | 5.00 | 5.00 | 4.50 | 4.50 | 1.00 |
| 8 | 5.00 | 5.00 | 5.00 | 5.00 | 4.50 | 1.50 |
| 9 | 5.00 | 5.00 | 5.00 | 5.00 | 4.50 | 2.00 |
| 10 | 5.00 | 5.00 | 5.00 | 5.00 | 5.00 | 2.00 |
| 15 | 5.00 | 5.00 | 5.00 | 5.00 | 5.00 | 2.50 |
| [1] Simulated Sand Mill | | | | | | |

Table VII

| | Conventional Examples | | Inventive Examples | | | Conventional Example |
|---|---|---|---|---|---|---|
| | II | III | C | D | E | IV |
| 1 Minute Grind[1] | | | | | | |
| 20˚ Gloss | 18.2 | 20.0 | 23.7 | 11.8 | 11.8 | 11.0 |

(continued)

|  | Conventional Examples | | Inventive Examples | | | Conventional Example |
|---|---|---|---|---|---|---|
|  | II | III | C | D | E | IV |
| 1 Minute Grind[1] | | | | | | |
| 60˚ Gloss | 61.9 | 62.6 | 70.8 | 53.4 | 52.7 | 44.1 |
| 85˚ Sheen | 78.4 | 72.9 | 89.1 | 77.8 | 72.8 | 46.7 |
| 5 Minute Grind[1] | | | | | | |
| 20˚ Gloss | 19.8 | 24.8 | 25.7 | 15.7 | 15.7 | 18.0 |
| 60˚ Gloss | 69.2 | 71.9 | 71.9 | 59.0 | 58.0 | 63.1 |
| 85˚ Sheen | 87.5 | 88.5 | 89.9 | 81.2 | 76.4 | 79.6 |
| 10 Minute Grind[1] | | | | | | |
| 20˚ Gloss | 23.3 | 27.9 | 31.2 | 15.0 | 18.0 | 21.8 |
| 60˚ Gloss | 69.9 | 73.7 | 77.8 | 59.7 | 62.7 | 66.4 |
| 85˚ Sheen | 87.8 | 89.6 | 92.2 | 82.4 | 80.0 | 82.3 |
| 15 Minute Grind[1] | | | | | | |
| 20˚ Gloss | 27.5 | 28.5 | 31.2 | 18.0 | 21.1 | 22.7 |
| 60˚ Gloss | 73.7 | 75.4 | 78.1 | 63.1 | 65.3 | 68.7 |
| 85˚ Sheen | 90.1 | 90.2 | 92.3 | 83.4 | 81.4 | 84.2 |
| [1] Simulated Sand Mill | | | | | | |

The results shown in Table VI indicate that the inventive Samples C, D, and E have higher dispersion rates than conventional Samples II, III, and IV. The results shown in Table VII indicate that inventive Samples C, D, and E and conventional Samples II, III, and IV have good non-aqueous dispersion properties.

## Example 3

To demonstrate the effect of pulverization, the dispersion rates of the non-pulverized, spray-dried feeds were measured and compared directly to the corresponding pulverized samples C and D according to the present invention. The dispersion rate was measured according to the test disclosed in Example 1. The results are shown in Table VIII:

**Table VIII**

| Grind[1] Time, Minutes | Spray-Dried Feed C | Inventive Sample C | Spray-Dried Feed D | Inventive Sample D |
|---|---|---|---|---|
| Hegman Grind | | | | |
| 1 | 0.0 | 2.00 | 0.0 | 3.00 |
| 2 | 0.0 | 2.00 | 0.0 | 3.00 |
| 3 | 0.0 | 3.00 | 0.0 | 3.50 |
| 4 | 0.0 | 3.50 | 0.0 | 3.50 |
| 5 | 0.0 | 4.00 | 0.0 | 4.50 |
| 6 | 0.0 | 4.50 | 0.0 | 5.00 |
| 7 | 0.0 | 5.00 | 0.0 | 5.00 |
| 8 | 0.0 | 5.00 | 0.0 | 5.00 |
| 9 | 0.0 | 5.00 | 0.0 | 5.00 |

(continued)

| Grind[1] Time, Minutes | Spray-Dried Feed C | Inventive Sample C | Spray-Dried Feed D | Inventive Sample D |
|---|---|---|---|---|
| Hegman Grind | | | | |
| 10 | 0.0 | 5.00 | 0.0 | 5.00 |
| [1] Simulated Sand Mill | | | | |

The results shown in Table VIII indicate the effect of pulverization, namely, that pulverized samples have higher dispersion rates than their corresponding non-pulverized samples. These results are shown with respect to the Hegman Grind value, wherein the higher number reflects a relative higher degree of dispersion.

## Example 4

The effect of pulverization was again demonstrated in Example 4. The dispersion rate was measured according to the test disclosed in Example 1, except that in measuring the dispersion rate, a high-speed, Cowles-type mixer was used in place of the simulated sand mill. The results are shown in Table IX:

Table IX

| Grind[1] Time, Minutes | Spray-Dried Feed C | Inventive Sample C | Spray-Dried Feed D | Inventive Sample D |
|---|---|---|---|---|
| | Hegman Grind | | | |
| 1 | 0.0 | 2.00 | 0.0 | 4.00 |
| 5 | 0.0 | 4.50 | 0.0 | 5.00 |
| 10 | 0.0 | 5.00 | 0.0 | 5.00 |
| 15 | 0.0 | 5.00 | 0.0 | 5.00 |
| 20 | 0.0 | 5.00 | 0.0 | 5.00 |
| [1] High Speed Cowles Dispersion | | | | |

The results shown in Tables IX indicate the effect of pulverization, namely, that pulverized samples have higher dispersion rates than their corresponding non-pulverized samples regardless which dispersion method was used. These results are shown with respect to the Hegman Grind value, wherein the higher number reflects a relative higher degree of dispersion.

## Example 5

The effect of pulverization was again demonstrated, this time, on three spray-dried hydrous kaolins. Samples F and G meet the particle size requirements of the present invention. In addition, a conventional spray-dried hydrous kaolin known to have very good dispersion characteristics, but that does not meet the particle size limitations of the present invention, was used as control Sample V. All three spray-dried hydrous kaolin samples were pulverized using a laboratory micropulverizer under conditions shown in Tables X and XI. For example, the screen sizes and numbers of passes through the micro-pulverizer were varied as shown in Table X and XI. In general, the use of a smaller screen and/or a larger number of passes results in a product having better dispersion properties. The dispersion rate and film properties were measured according to the methods disclosed in Example 1. The results are shown in Table X and Table XI, respectively:

Table X

| | Inventive F | | | Inventive G | | | Conventional Control V | | |
|---|---|---|---|---|---|---|---|---|---|
| Screen | Large | Small | Small | Large | Small | Small | Large | Small | Small |
| # of Passes | 1 | 1 | 3 | 1 | 1 | 3 | 1 | 1 | 3 |
| Grind[1] Time (Minutes) | Hegman Grind Value | | | | | | | | |
| 1 | 0.00 | 0.00 | 1.00 | 0.00 | 1.00 | 1.00 | 0.00 | 0.00 | 0.00 |

(continued)

| | Inventive F | | | Inventive G | | | Conventional Control V | | |
|---|---|---|---|---|---|---|---|---|---|
| Screen | Large | Small | Small | Large | Small | Small | Large | Small | Small |
| # of Passes | 1 | 1 | 3 | 1 | 1 | 3 | 1 | 1 | 3 |
| Grind[1] Time (Minutes) | Hegman Grind Value | | | | | | | | |
| 2 | 0.00 | 0.50 | 5.00 | 0.00 | 1.00 | 1.00 | 0.00 | 0.00 | 0.00 |
| 3 | 0.00 | 2.00 | 5.00 | 0.00 | 1.50 | 1.50 | 0.00 | 0.00 | 0.00 |
| 4 | 0.00 | 2.00 | 5.00 | 0.00 | 1.50 | 1.50 | 0.00 | 0.00 | 0.00 |
| 5 | 0.00 | 2.00 | 5.00 | 0.00 | 2.00 | 2.00 | 0.00 | 0.00 | 0.50 |
| 6 | 0.00 | 2.00 | 5.00 | 0.00 | 2.00 | 2.00 | 0.00 | 0.00 | 1.00 |
| 7 | 0.00 | 2.00 | 5.00 | 0.00 | 3.00 | 3.00 | 0.00 | 0.00 | 1.50 |
| 8 | 0.00 | 2.00 | 5.00 | 0.00 | 3.00 | 4.00 | 0.00 | 0.00 | 2.50 |
| 9 | 0.00 | 2.50 | 5.00 | 0.00 | 3.50 | 5.00 | 0.00 | 0.00 | 4.00 |
| 10 | 0.00 | 3.00 | 6.00 | 0.00 | 3.50 | 5.50 | 0.00 | 0.00 | 5.00 |
| 15 | 0.00 | 3.00 | 6.00 | 0.00 | 3.50 | 6.00 | 0.00 | 0.00 | 6.00 |
| [1] Simulated Sand Mill | | | | | | | | | |

Table XI

| | Inventive F | | | Inventive G | | | Conventional Control V | | |
|---|---|---|---|---|---|---|---|---|---|
| Screen | Large | Smal | Small | Large | Small | Small | Large | Small | Small |
| # of Passes | 1 | 1 | 3 | 1 | 1 | 3 | 1 | 1 | 3 |
| 1 Minute Grind[1] | | | | | | | | | |
| 20˚ Gloss | 17.4 | 22.6 | 30.5 | 16.3 | 16.7 | 19.4 | 8.4 | 10.0 | 21.1 |
| 60˚ Gloss | 59.2 | 69.0 | 76.5 | 60.0 | 61.0 | 67.2 | 37.9 | 44.1 | 65.1 |
| 85˚ Sheen | 70.1 | 85.9 | 94.1 | 73.3 | 81.2 | 87.4 | 39.2 | 52.4 | 79.3 |
| 5 Minute Grind[1] | | | | | | | | | |
| 20˚ Gloss | 18.0 | 26.5 | 32.8 | 17.4 | 20.3 | 22.4 | 10.3 | 10.8 | 23.4 |
| 60˚ Gloss | 60.5 | 71.9 | 79.0 | 62.8 | 66.3 | 69.8 | 42.7 | 47.0 | 68.7 |
| 85˚ Sheen | 73.0 | 87.3 | 95.4 | 77.5 | 84.4 | 89.2 | 46.7 | 59.6 | 86.8 |
| 10 Minute Grind[1] | | | | | | | | | |
| 20˚ Gloss | 22.6 | 24.6 | 31.3 | 21.4 | 22.6 | 23.1 | 11.8 | 15.4 | 28.7 |
| 60˚ Gloss | 66.2 | 71.0 | 77.5 | 67.5 | 70.3 | 71.8 | 45.7 | 53.9 | 73.8 |
| 85˚ Sheen | 77.6 | 88.8 | 96.2 | 81.8 | 87.6 | 91.2 | 48.9 | 66.3 | 90.7 |
| 15 Minute Grind[1] | | | | | | | | | |
| 20˚ Gloss | 23.7 | 29.1 | 37.3 | 23.2 | 22.5 | 30.8 | 14.0 | 14.9 | 31.3 |
| 60˚ Gloss | 67.4 | 74.7 | 82.4 | 68.3 | 69.7 | 77.2 | 48.5 | 54.1 | 75.7 |

(continued)

| 15 Minute Grind[1] | | | | | | | | | |
|---|---|---|---|---|---|---|---|---|---|
| 85° Sheen | 77.3 | 90.5 | 95.8 | 83.6 | 88.1 | 92.8 | 51.3 | 67.9 | 91.5 |
| [1] Simulated Sand Mill | | | | | | | | | |

The results indicate the effect of pulverization, namely, that the relative rate of dispersion indicated by the Hegman Grind value is also dependent on the degree of pulverization. Samples that have undergone more thorough pulverization have higher dispersion rate than the same samples that have undergone less thorough pulverization. Even under the same pulverization conditions, the inventive samples according to the present invention have a higher dispersion rate than the conventional sample.

In addition, as shown in Table XI, the inventive Samples F and G, which underwent pulverization with a small screen and one pass show similar film properties as the conventional control Sample V that underwent pulverization with a small screen and three passes.

**Claims**

1.   A composition comprising pulverized hydrous kaolin obtainable by using a Bauer mill, an air classification mill or a micromill, wherein the pulverized hydrous kaolin has a particle size distribution of the following ratio:

$$\frac{(\text{cumulative mass at } 0.5 \ \mu m)}{(\text{cumulative mass at } 2 \ \mu m)} \leq 0.5,$$

and a median particle size ($D_{50}$) less than or equal to 2.0 $\mu$m.

2.   The composition according to Claim 1, wherein the pulverized hydrous kaolin has a median particle size ($D_{50}$) ranging from 0.5 $\mu$m to 1.5 $\mu$m.

3.   The composition according to Claim 1, wherein the pulverized hydrous kaolin has a median particle size ($D_{50}$) of less than 2.0 $\mu$m and greater than 0.4 $\mu$m.

4.   The composition according to Claim 2, wherein the pulverized hydrous kaolin has a median particle size ($D_{50}$) of less than 1.0 $\mu$m and greater than 0.5 $\mu$m.

5.   A method of preparing a kaolin composition comprising:

pulverizing hydrous kaolin by using a Bauer mill, an air classification mill or a micromill, wherein the hydrous kaolins have the following particle size distribution ratio:

$$\frac{(\text{cumulative mass at } 0.5 \ \mu m)}{(\text{cumulative mass at } 2 \ \mu m)} \leq 0.5,$$

a median particle size ($D_{50}$) less than or equal to 2.0 $\mu$m; and
including the pulverized hydrous kaolins in the composition.

6.   A method for increasing the dispersion rate of hydrous kaolins, comprising pulverizing the hydrous kaolins by using a Bauer mill, an air classification mill or a micromill, wherein the hydrous kaolins have a particle size distribution of the following ratio:

$$\frac{\text{(cumulative mass at 0.5 μm)}}{\text{(cumulative mass at 2 μm)}} \leq 0.5,$$

a median particle size ($D_{50}$) less than or equal to 2.0 μm.

7. An ink comprising, in an appropriate medium, pulverized hydrous kaolin obtainable by using a Bauer mill, an air classification mill or a micromill, wherein the pulverized hydrous kaolin has a particle size distribution of the following ratio:

$$\frac{\text{(cumulative mass at 0.5 μm)}}{\text{(cumulative mass at 2 μm)}} \leq 0.5,$$

and a median particle size ($D_{50}$) less than or equal to 2.0 μm.

8. The ink according to Claim 7, wherein the appropriate medium is chosen from aqueous media and non-aqueous media.

9. The ink according to Claim 7, wherein the ink is chosen from gravure inks, heat-set inks, lithographic printing inks, and newsprint inks.

10. The ink according to Claim 7, further comprising at least one component chosen from resins, polymers, additives, fillers, diluents, humectants, lecithin, and biocides.

11. The ink according to Claim 10, wherein the resins are chosen from vinyl resins, acrylic resins, hydrocarbon resins, polyester resins, metal-containing resinates, and cellulosic resinates.

12. The ink according to Claim 10, wherein the additives are chosen from rheology modifiers, surfactants, and drying accelerating agents.

13. The ink according to claims 10, wherein the additives are chosen from drying accelerating agents.

14. The ink according to Claim 13, wherein the drying accelerating agents are chosen from sodium lauryl sulfate, N, N-diethyl-m-toluamide, cyclohexylpyrrolidinone and butyl carbitol.

15. The ink according to Claim 10, wherein the humectants are chosen from ethylene glycol, propylene glycol, diethylene glycols, glycerine, dipropylene glycols, polyethylene glycols, polypropylene glycols, amides, ethers, carboxylic acids, esters, alcohols, organosulfides, organosulfoxides, sulfones, alcohol derivatives, carbitol, butyl carbitol, cellosolve, ether derivatives, amino alcohols, and ketones.

16. The ink according to Claim 10, wherein the biocides are chosen from benzoates, sorbates, and isothiazolones.

17. The ink according to Claim 7, further comprising at least one pigment.

18. A paint comprising, in an appropriate medium, pulverized hydrous kaolin obtainable by using a Bauer mill, an air classification mill or a micro mill, wherein the pulverized hydrous kaolin has a particle size distribution of the following ratio:

$$\frac{\text{(cumulative mass at 0.5 μm)}}{\text{(cumulative mass at 2 μm)}} \leq 0.5,$$

and a median particle size ($D_{50}$) less than or equal to 2.0 μm.

19. The paint according to Claim 18, wherein the paint is chosen from architectural paints, deco paints, art paints, and industrial coatings.

20. The paint according to Claim 18, wherein the paint has a pigment volume concentration in the range of 1%-80%.

21. The paint composition of Claim 18, wherein the paint has a pigment volume concentration below its critical pigment volume concentration.

22. The paint according to Claim 18, further comprising at least one component chosen from binders and additives.

23. The paint according to Claim 22, wherein the binders are chosen from aqueous dispersible binders and non-aqueous dispersible binders.

24. The paint according to Claim 22, wherein the binders are chosen from polyvinyl alcohol, acrylic, vinyl acrylic, vinyl acetate, styrene-containing and latex-containing binders.

25. The paint according to Claim 22, wherein the additives are chosen from surfactants, thickeners, defoamers, wetting agents, dispersants, biocides, and coalescents.

26. The paint according to Claim 18, further comprising at least one pigment.

27. The paint according to Claim 26, wherein the at least one additional pigment is chosen from $TiO_2$ and calcium carbonate.

28. A polymer product comprising pulverized hydrous kaolin obtainable by using a Bauer mill, an air classification mill or a micromill, wherein the pulverized hydrous kaolin has a particle size distribution of the following ratio:

$$\frac{\text{(cumulative mass at 0.5 } \mu\text{m)}}{\text{(cumulative mass at 2 } \mu\text{m)}} \leq 0.5,$$

and a median particle size ($D_{50}$) less than or equal to 2.0 $\mu$m.

29. The polymer product according to Claim 28, further comprising at least one polymer resin.

30. The polymer product according to Claim 29, wherein the at least one polymer resin is chosen from polyolefin resins, allyl resins, polyamide resins, polyester resins, engineering polymers, thermoplastic resins and thermoset resins.

31. A rubber product comprising pulverized hydrous kaolin obtainable by using a Bauer mill, an air classification mill or a micromill, wherein the pulverized hydrous kaolin has a particle size distribution of the following ratio:

$$\frac{\text{(cumulative mass at 0.5 } \mu\text{m)}}{\text{(cumulative mass at 2 } \mu\text{m)}} \leq 0.5,$$

and a median particle size ($D_{50}$) less than or equal to 2.0 $\mu$m.

32. The rubber product according to Claim 31, wherein the rubber product comprises at least one rubber chosen from natural rubbers and synthetic rubbers.

33. The rubber product according to Claim 32, wherein the synthetic rubbers are chosen from sulphur-vulcanisable rubbers, styrene-butadiene rubbers, vinyl-styrene-butadiene rubbers, butadiene rubbers, and neoprene rubbers.

34. The rubber product according to Claim 33, wherein the styrene-butadiene rubbers are chosen from emulsion and solution styrene-butadiene rubbers.

**35.** The rubber product according to Claim 33, wherein the butadiene rubbers are chosen from cis-1,3-polybutadiene rubber and cis-1,4-polybutadiene rubber.

**36.** The rubber product according to Claim 32, wherein the natural rubbers are Standard Malaysian natural rubbers.

**37.** A coating comprising pulverized hydrous kaolin obtainable by using a Bauer mill, an air classification mill or a micromill, wherein the pulverized hydrous kaolin has a particle size distribution of the following ratio:

$$\frac{\text{(cumulative mass at 0.5 μm)}}{\text{(cumulative mass at 2 μm)}} \leq 0.5,$$

and a median particle size ($D_{50}$) less than or equal to 2.0 μm.

**38.** The coating according to Claim 37, further comprising at least one binder.

**39.** A paper coating comprising pulverized hydrous kaolin obtainable by using a Bauer mill, an air classification mill or a micromill, wherein the pulverized hydrous kaolin has a particle size distribution of the following ratio:

$$\frac{\text{(cumulative mass at 0.5 μm)}}{\text{(cumulative mass at 2 μm)}} \leq 0.5,$$

and a median particle size ($D_{50}$) less than or equal to 2.0 μm.

**40.** A paperboard coating comprising pulverized hydrous kaolin obtainable by using a Bauer mill, an air classification mill or a micromill, wherein the pulverized hydrous kaolin has a particle size distribution of the following ratio:

$$\frac{\text{(cumulative mass at 0.5 μm)}}{\text{(cumulative mass at 2 μm)}} \leq 0.5,$$

and a median particle size ($D_{50}$) less than or equal to 2.0 μm.

**Patentansprüche**

**1.** Zusammensetzung, beinhaltend pulverförmiges wasserhaltiges Kaolin, das erhalten wird mit Hilfe einer Bauermühle, einer Luftsichtungsmühle oder einer Mikromühle, wobei das pulverförmige wasserhaltige Kaolin eine Korngrößenverteilung hat mit folgendem Verhältnis

$$\frac{\text{(kumulierte Masse bei 0,5 μm)}}{\text{(kumulierte Masse bei 2 μm)}} \leq 0,5,$$

und eine Median-Korngröße ($D_{50}$) von kleiner oder gleich 2,0 μm.

**2.** Zusammensetzung nach Anspruch 1, wobei das pulverförmige wasserhaltige Kaolin eine Median-Korngröße ($D_{50}$) von 0,5 μm bis 1,5 μm hat.

**3.** Zusammensetzung nach Anspruch 1, wobei das pulverförmige wasserhaltige Kaolin eine Median-Korngröße ($D_{50}$) hat, die kleiner ist als 2,0 μm und größer als 0,4 μm.

**4.** Zusammensetzung nach Anspruch 2, wobei das pulverförmige wasserhaltige Kaolin eine Median-Korngröße ($D_{50}$) hat, die kleiner ist als 1,0 µm und größer als 0,5 µm.

**5.** Verfahren zum Herstellen einer Kaolinzusammensetzung, umfassend:

Pulverisieren von wasserhaltigem Kaolin mit einer Bauermühle, einer Luftsichtungsmühle oder einer Mikromühle, wobei die wasserhaltigen Kaoline eine Korngrößenverteilung haben mit dem Verhältnis

$$\frac{\text{(kumulierte Masse bei 0,5 µm)}}{\text{(kumulierte Masse bei 2 µm)}} \leq 0,5,$$

und eine Median-Korngröße ($D_{50}$) von kleiner oder gleich 2,0 µm; und
Zusetzen der pulverförmigen wasserhaltigen Kaoline in die Zusammensetzung.

**6.** Verfahren zum Erhöhen des Dispergiergrades von wasserhaltigen Kaolinen, umfassend das Pulverisieren von wasserhaltigen Kaolinen mit Hilfe einer Bauermühle, einer Luftsichtungsmühle oder einer Mikromühle, wobei die wasserhaltigen Kaoline eine Korngrößenverteilung haben mit dem Verhältnis

$$\frac{\text{(kumulierte Masse bei 0,5 µm)}}{\text{(kumulierte Masse bei 2 µm)}} \leq 0,5,$$

und eine Median-Korngröße ($D_{50}$) von kleiner oder gleich 2,0 µm.

**7.** Tinte, beinhaltend in einem geeigneten Medium pulverförmiges wasserhaltiges Kaolin, das erhalten wird mit Hilfe einer Bauermühle, einer Luftsichtungsmühle oder einer Mikromühle, wobei das pulverförmige wasserhaltige Kaolin eine Korngrößenverteilung hat mit dem Verhältnis

$$\frac{\text{(kumulierte Masse bei 0,5 µm)}}{\text{(kumulierte Masse bei 2 µm)}} \leq 0,5,$$

und eine Median-Korngröße ($D_{50}$) von kleiner oder gleich 2,0 µm.

**8.** Tinte nach Anspruch 7, wobei das geeignete Medium ausgewählt ist aus wässrigen und nicht-wässrigen Medien.

**9.** Tinte nach Anspruch 7, wobei die Tinte ausgewählt ist aus Gravurtinten, wärmeabbindenden Tinten, Lithographie-Drucktinten und Druckerschwärzen.

**10.** Tinte nach Anspruch 7, zudem enthaltend mindestens einen Bestandteil, ausgewählt aus Harze, Polymere, Additive, Füllmittel, Verdünnungsmittel, Feuchthaltemittel, Lecithin und Biozide.

**11.** Tinte nach Anspruch 10, wobei die Harze ausgewählt sind aus Vinylharze, Akrylharze, Kohlenwasserstoffharze, Polyesterharze, metallhaltige Resinate und Zelluloseresinate.

**12.** Tinte nach Anspruch 10, wobei die Additive ausgewählt sind aus Rheologiemodifizierer, Tenside und Trocknungsbeschleuniger.

**13.** Tinte nach Anspruch 10, wobei die Additive ausgewählt sind aus Trocknungsbeschleunigern.

**14.** Tinte nach Anspruch 13, wobei die Trocknungsbeschleuniger ausgewählt sind aus Natriumlaurylsulfat, N, N-Diethyl-m-toluamid, Cyclohexylpyrrolidinon und Butylkarbitol.

15. Tinte nach Anspruch 10, wobei die Feuchthaltemittel ausgewählt sind aus Ethylenglykol, Propylenglykol, Diethylenglykole, Glyzerin, Dipropylenglykole, Polyethylenglykole, Polypropylenglykole, Amide, Ethere, Carboxylsäuren, Estere, Alkohole, Organosulfide, Organosulfoxide, Sulfone, Alkoholderivate, Karbitol, Butylkarbitol, Cellosolve, Etherderivate, Aminoalkohole und Ketone.

16. Tinte nach Anspruch 10, wobei die Biozide ausgewählt sind aus Benzoate, Sorbate und Isothiazolone.

17. Tinte nach Anspruch 7, zudem enthaltend mindestens ein Pigment.

18. Farbe, beeinhaltend in einem geeigneten Medium pulverförmiges wasserhaltiges Kaolin, das erhalten wird mit Hilfe einer Bauermühle, einer Luftsichtungsmühle oder einer Mikromühle, wobei das wasserhaltige Kaolin eine Korngrößenverteilung hat mit folgendem Verhältnis

$$\frac{\text{(kumulierte Masse bei 0,5 μm)}}{\text{(kumulierte Masse bei 2 μm)}} \leq 0,5,$$

und eine Median-Korngröße ($D_{50}$) von kleiner oder gleich 2,0 μm.

19. Farbe nach Anspruch 18, wobei die Farbe ausgewählt ist aus architektonische Farben, Dekorationsfarben, Künstlerfarben und industrielle Beschichtungen.

20. Farbe nach Anspruch 18, wobei die Farbe eine Volumenkonzentration an Pigment im Bereich von 1 % bis 80% hat.

21. Farbzusammensetzung nach Anspruch 18, wobei die Farbe eine Volumenkonzentration an Pigment unter der kritischen Pigmentvolumenkonzentration hat.

22. Farbe nach Anspruch 18, zudem enthaltend mindestens einen Bestandteil ausgewählt aus Bindemittel und Additive.

23. Farbe nach Anspruch 22, wobei die Bindemittel ausgewählt sind aus wässrige dispergierbare Bindemittel und nichtwässrige dispergierbare Bindemittel.

24. Farbe nach Anspruch 22, wobei die Bindemittel ausgewählt sind aus Polyvinylalkohol, Acryl, Vinylacryl, Vinylacetat, Styrol- und Latex-haltige Bindemittel.

25. Farbe nach Anspruch 22, wobei die Zusätze ausgewählt sind aus Oberflächenmittel, Verdickungsmittel, Entschäumer, Befeuchtungsmittel, Dispergiermittel, Biozide und Verwachsungsmittel.

26. Farbe nach Anspruch 18, zudem enthaltend mindestens ein Pigment.

27. Farbe nach Anspruch 26, wobei das mindestens eine zusätzliche Pigment ausgewählt ist aus $TiO_2$ und Calciumcarbonat.

28. Polymerprodukt, beinhaltend pulverförmiges wasserhaltiges Kaolin, das erhalten wird mit Hilfe einer Bauermühle, einer Luftsichtungsmühle oder einer Mikromühle, wobei das pulverförmige wasserhaltige Kaolin eine Korngrößenverteilung hat mit dem Verhältnis

$$\frac{\text{(kumulierte Masse bei 0,5 μm)}}{\text{(kumulierte Masse bei 2 μm)}} \leq 0,5,$$

und eine Median-Korngröße ($D_{50}$) von kleiner oder gleich 2,0 μm.

29. Polymerprodukt nach Anspruch 28, zudem enthaltend mindestens ein Polymerharz.

30. Polymerprodukt nach Anspruch 29, wobei das mindestens eine Polymerharz ausgewählt ist aus Polyolefinharze, Allylharze, Polyamidharze, Polyesterharze, Hochleistungskunststoffe, thermoplastische Harze und duroplastische Harze.

31. Kautschukprodukt, beinhaltend pulverförmiges wasserhaltiges Kaolin, das erhalten wird mit Hilfe einer Bauermühle, einer Luftsichtungsmühle oder einer Mikromühle, wobei das pulverförmige wasserhaltige Kaolin eine Korngrößenverteilung hat mit folgendem Verhältnis

$$\frac{\text{(kumulierte Masse bei 0,5 μm)}}{\text{(kumulierte Masse bei 2 μm)}} \leq 0,5,$$

und eine Median-Korngröße ($D_{50}$) von kleiner oder gleich 2,0 μm.

32. Kautschukprodukt nach Anspruch 31, wobei das Kautschukprodukt mindestens ein Kautschuk umfasst, ausgewählt aus Naturkautschuk und Kunstkautschuk.

33. Kautschukprodukt nach Anspruch 32, wobei die Kunstkautschuks ausgewählt sind aus schwefelvulkanisierbare Kautschuks, Styrenbutadienkautschuks, Vinylstyrenbutadienkautschuks, Butadienkautschuks, und Neoprenkautschuks.

34. Kautschukprodukt nach Anspruch 33, wobei die Styrenbutadienkautschuks ausgewählt sind aus Emulsions- und Lösungs-Styrenbutadienkautschuks.

35. Kautschukprodukt aus Anspruch 33, wobei die Butadienkautschuks ausgewählt sind aus cis-1,3-polybutadien-Kautschuk und cis-1,4-polybutadien-Kautschuk.

36. Kautschukprodukt aus Anspruch 32, wobei die Naturkautschuks "Standard Malaysian"-Naturkautschuks sind.

37. Beschichtung, beinhaltend pulverförmiges wasserhaltiges Kaolin, das erhalten wird mit Hilfe einer Bauermühle, einer Luftsichtungsmühle oder einer Mikromühle, wobei das pulverförmige wasserhaltige Kaolin eine Korngrößenverteilung hat mit folgendem Verhältnis

$$\frac{\text{(kumulierte Masse bei 0,5 μm)}}{\text{(kumulierte Masse bei 2 μm)}} \leq 0,5,$$

und eine Median-Korngröße ($D_{50}$) von kleiner oder gleich 2,0 μm.

38. Beschichtung nach Anspruch 37, zudem enthaltend mindestens ein Bindemittel.

39. Papierbeschichtung, beinhaltend pulverförmiges wasserhaltiges Kaolin, das erhalten wird mit Hilfe einer Bauermühle, einer Luftsichtungsmühle oder einer Mikromühle, wobei das pulverförmige wasserhaltige Kaolin eine Korngrößenverteilung hat mit folgendem Verhältnis

$$\frac{\text{(kumulierte Masse bei 0,5 μm)}}{\text{(kumulierte Masse bei 2 μm)}} \leq 0,5,$$

und eine Median-Korngröße ($D_{50}$) von kleiner oder gleich 2,0 μm.

**40.** Pappbeschichtung beinhaltend pulverförmiges wasserhaltiges Kaolin, das erhalten wird mit Hilfe einer Bauermühle, einer Luftsichtungsmühle oder einer Mikromühle, wobei das pulverförmige wasserhaltige Kaolin eine Korngrößenverteilung hat mit dem Verhältnis

$$\frac{(\text{kumulierte Masse bei 0,5 µm})}{(\text{kumulierte Masse bei 2 µm})} \leq 0,5,$$

und eine Median-Korngröße ($D_{50}$) von kleiner oder gleich 2,0 µm.

**Revendications**

**1.** Composition comprenant du kaolin hydraté pulvérisé pouvant être obtenu par un broyeur Bauer, un broyeur de classification à air ou un micro-broyeur dans laquelle le kaolin hydraté pulvérisé a une distribution de tailles de particules du rapport

$$\frac{(\text{masse cumulative à 0,5 µm})}{(\text{masse cumulative à 2 µm})} \leq 0,5,$$

et une taille de particules médiane ($D_{50}$) inférieure ou égale à 2,0 µm.

**2.** Composition selon la revendication 1 dans laquelle le kaolin hydraté pulvérisé a une taille de particules médiane ($D_{50}$) entre 0,5 µm et 1,5 µm.

**3.** Composition selon la revendication 1 dans laquelle le kaolin hydraté pulvérisé a une taille de particules médiane ($D_{50}$) inférieure à 2,0 µm et supérieure à 0,4 µm.

**4.** Composition selon la revendication 2 dans laquelle le kaolin hydraté pulvérisé a une taille de particules médiane ($D_{50}$) inférieure à 1,0 µm et supérieure à 0,5 µm.

**5.** Procédé pour préparer une composition de kaolin, le procédé comprenant :

pulvériser du kaolin hydraté à l'aide d'un broyeur Bauer, d'un broyeur de classification à air ou d'un micro-broyeur, dans lequel les kaolins hydratés ont un rapport de distribution de tailles de particules de

$$\frac{(\text{masse cumulative à 0,5 µm})}{(\text{masse cumulative à 2 µm})} \leq 0,5,$$

et une taille de particules médiane ($D_{50}$) inférieure ou égale à 2,0 µm ; et
introduire les kaolins hydratés pulvérisés dans la composition.

**6.** Procédé pour augmenter le taux de dispersion de kaolins hydratés comprenant pulvériser les kaolins hydratés à l'aide d'un broyeur Bauer, d'un broyeur de classification à air ou d'un micro-broyeur, dans lequel les kaolins hydratés ont une distribution de tailles de particules du rapport

$$\frac{\text{(masse cumulative à 0,5 μm)}}{\text{(masse cumulative à 2 μm)}} \leq 0,5,$$

et une taille de particules médiane ($D_{50}$) inférieure ou égale à 2,0 μm.

**7.** Encre comprenant, dans un médium approprié, des kaolins hydratés pulvérisés pouvant être obtenus par un broyeur Bauer, un broyeur de classification à air ou un micro-broyeur, dans laquelle le kaolin hydraté pulvérisé a une distribution de tailles de particules du rapport

$$\frac{\text{(masse cumulative à 0,5 μm)}}{\text{(masse cumulative à 2 μm)}} \leq 0,5,$$

et une taille de particules médiane ($D_{50}$) inférieure ou égale à 2,0 μm.

**8.** Encre selon la revendication 7 dans laquelle le médium approprié est choisi de média aqueux et média non-aqueux.

**9.** Encre selon la revendication 7 dans laquelle l'encre est choisie d'encres héliogravure, encres thermoséchantes, encres lithographiques et encres d'imprimerie.

**10.** Encre selon la revendication 7 comprenant en plus au moins une composante choisie de résines, polymères, additifs, remplisseurs, diluants, humidifiants, lécithine et biocides.

**11.** Encre selon la revendication 10 dans laquelle les résines sont choisies de résines vinyliques, résines acryliques, résines hydrocarbures, résines polyesters, résinates contenant un métal et résinates cellulosiques.

**12.** Encre selon la revendication 10 dans laquelle les additifs sont choisis de modificateurs de rhéologie, agents de surface, et accélérateurs de séchage.

**13.** Encre selon la revendication 10 dans laquelle les additifs sont choisis d'accélérateurs de séchage.

**14.** Encre selon la revendication 13 dans laquelle les accélérateurs de séchage sont choisis de laurylsulfate de sodium, N,N-diéthyle-m-toluamide, cyclohexylpyrrolidinone et butyléthoxydiglycol.

**15.** Encre selon la revendication 10 dans laquelle les humidifiants sont choisis d'éthylène glycol, propylène glycol, diéthylène glycols, glycérine, dipropylène glycols, polyéthylène glycols, polypropylène glycols, amides, éthers, acides carboxyliques, esters, alcools, organosulfures, organosulfoxydes, sulfones, dérivés d'alcools, éthoxydiglycol, butyléthoxydiglycol, éther monométhylique de l'éthylène glycol, dérivés d'éthers, aminoalcools et cétones.

**16.** Encre selon la revendication 10 dans laquelle les biocides sont choisis de benzoates, sorbates et isothialozones.

**17.** Encre selon la revendication 7, comprenant en plus au moins un pigment.

**18.** Peinture comprenant, dans un médium approprié, du kaolin hydraté pulvérisé pouvant être obtenu par un broyeur Bauer, un broyeur de classification à air ou un micro-broyeur, dans laquelle le kaolin hydraté pulvérisé a une distribution de tailles de particules du rapport

$$\frac{\text{(masse cumulative à 0,5 μm)}}{\text{(masse cumulative à 2 μm)}} \leq 0,5,$$

et une taille de particules médiane (D$_{50}$) inférieure ou égale à 2,0 $\mu$m.

**19.** Peinture selon la revendication 18 dans laquelle la peinture est choisie de peintures architecturales, peintures décoratives, peintures artistiques et couchages industriels.

**20.** Peinture selon la revendication 18 dans laquelle la peinture a une concentration volumique de pigment entre 1% et 80%.

**21.** Composition de peinture selon la revendication 18 dans laquelle la peinture a une concentration volumique de pigment inférieure à la concentration volumique critique de pigment.

**22.** Peinture selon la revendication 18 comprenant en plus au moins une composante choisie de liants et additifs.

**23.** Peinture selon la revendication 22 dans laquelle les liants sont choisis de liants susceptibles d'être dispersés en médium aqueux et liants susceptibles d'être dispersés en médium non-aqueux.

**24.** Peinture selon la revendication 22 dans laquelle les liants sont choisis d'alcool polyvinylique, arcylique, vinylacrylique, acétate de vinyle, liants comprenant du styrène et liants comprenant du latex.

**25.** Peinture selon la revendication 22 dans laquelle les additifs sont choisis d'agents de surface, agents épaississants, agents antimousse, agents mouillants, agents dispersants, biocides et d'agents de coalescence.

**26.** Peinture selon la revendication 18 comprenant en plus au moins un pigment.

**27.** Peinture selon la revendication 26 dans laquelle ledit au moins un pigment est choisi de TiO$_2$ et carbonate de calcium.

**28.** Produit polymérique comprenant du kaolin hydraté pulvérisé pouvant être obtenu par un broyeur Bauer, un broyeur de classification à air ou un micro-broyeur, dans lequel le kaolin hydraté pulvérisé a une distribution de tailles de particules du rapport

$$\frac{(\text{masse cumulative à } 0,5 \ \mu m)}{(\text{masse cumulative à } 2 \ \mu m)} \leq 0,5,$$

et une taille de particules médiane (D$_{50}$) inférieure ou égale à 2,0 $\mu$m.

**29.** Produit polymérique selon la revendication 28 comprenant en plus au moins une résine polymérique.

**30.** Produit polymérique selon la revendication 29 dans lequel ladite au moins une résine polymérique est choisie de résines polyoléfiniques, résines allyliques, résines polyamides, résines polyesters, polymères de haute-performance, résines thermoplastiques et résines thermodurcissables.

**31.** Produit en caoutchouc comprenant du kaolin hydraté pulvérisé pouvant être obtenu par un broyeur Bauer, un broyeur de classification à air ou un micro-broyeur, dans lequel le kaolin hydraté pulvérisé a une distribution de tailles de particules du rapport

$$\frac{(\text{masse cumulative à } 0,5 \ \mu m)}{(\text{masse cumulative à } 2 \ \mu m)} \leq 0,5,$$

et une taille de particules médiane (D$_{50}$) inférieure ou égale à 2,0 $\mu$m.

**32.** Produit en caoutchouc selon la revendication 31 dans lequel le produit de caoutchouc comprend au moins un caoutchouc choisi de caoutchoucs naturels et caoutchoucs synthétiques.

**33.** Produit en caoutchouc selon la revendication 32 dans lequel les caoutchoucs synthétiques sont choisis de caoutchoucs vulcanisables par le sulfure, caoutchoucs butadiène-styrène, caoutchoucs butadiène-styrène-vinyle, caoutchoucs butadiène et caoutchoucs néoprène.

**34.** Produit en caoutchouc selon la revendication 33 dans lequel les caoutchoucs butadiène-styrène sont choisis de caoutchoucs butadiène-styrène d'émulsion et de solution.

**35.** Produit en caoutchouc selon la revendication 33 dans lequel les caoutchoucs butadiène sont choisis de caoutchouc cis-1,3-polybutadiène et caoutchouc cis-1,4-polybutadiène.

**36.** Produit en caoutchouc selon la revendication 32 dans lequel les caoutchoucs naturels sont des caoutchoucs naturels « Standard Malaysian ».

**37.** Couchage comprenant du kaolin hydraté pulvérisé pouvant être obtenu par un broyeur Bauer, un broyeur de classification à air ou un micro-broyeur, dans lequel le kaolin hydraté pulvérisé a une distribution de tailles de particules du rapport

$$\frac{\text{(masse cumulative à 0,5 μm)}}{\text{(masse cumulative à 2 μm)}} \leq 0,5,$$

et une taille de particules médiane ($D_{50}$) inférieure ou égale à 2,0 μm.

**38.** Couchage selon la revendication 37 comprenant en plus au moins un liant.

**39.** Couchage de papier comprenant du kaolin hydraté pulvérisé pouvant être obtenu par un broyeur Bauer, un broyeur de classification à air ou un micro-broyeur, dans lequel le kaolin hydraté pulvérisé a une distribution de tailles de particules du rapport

$$\frac{\text{(masse cumulative à 0,5 μm)}}{\text{(masse cumulative à 2 μm)}} \leq 0,5,$$

et une taille de particules médiane ($D_{50}$) inférieure ou égale à 2,0 μm.

**40.** Couchage de carton comprenant du kaolin hydraté pulvérisé pouvant être obtenu par un broyeur Bauer, un broyeur de classification à air ou un micro-broyeur, dans lequel le kaolin hydraté pulvérisé a une distribution de tailles de particules du rapport

$$\frac{\text{(masse cumulative à 0,5 μm)}}{\text{(masse cumulative à 2 μm)}} \leq 0,5,$$

et une taille de particules médiane ($D_{50}$) inférieure ou égale à 2,0 μm.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 52367203 P
- US 20030164117 A

- WO 03022933 A